# EUROPEAN PATENT APPLICATION

(11) **EP 2 747 492 A2**
(43) Date of publication of application: **25.06.2014**
(21) Application number: 13198774.5
(22) Date of filing: 20.12.2013
(51) Int. Cl.: H04W 52/02

(54) **Method and apparatus for cell activation**

(30) Priority: 21.12.2012 GB 201223272
(71) Applicant: Broadcom Corporation, Irvine, CA 92617 (US)
(72) Inventor: Charbit, Gilles, Farnborough, Hampshire GU14 7BX (GB); Zeng, Erlin, 100096 Beijing (CN)
(74) Representative: EIP

(57) **Abstract**

In some examples, the method, apparatus and computer program product as described herein is configured for cell Discontinuous Transmission. In this regard, a method is provided that includes receiving an indication of a discovery of a cell by a communications device. The method of this embodiment may also include determining the cell based on the indication. The method of this embodiment may also include causing the cell to transition to an activated state from a dormant state.

## Description

### Technical Field

Embodiments of the present invention relate generally to communications technology and, more particularly, to activation of cells (e.g. new carrier type (NCT)) in a dormant state.

### Background

The modern computing era has brought about a tremendous expansion in computing power as well as increased affordability of computing devices. This expansion in computing power has led to a reduction in the size of computing devices and given rise to a new generation of mobile devices that are capable of performing functionality that only a few years ago required processing power provided only by the most advanced desktop computers. Consequently, mobile computing devices having a small form factor have become ubiquitous and are used by consumers of all socioeconomic backgrounds.

As a result of the expansion in computing power and the reduction in size of mobile computing devices, mobile computing devices are being constantly activated on networks that are already experiencing high levels of network density. As a result, networks have more and more activated base stations that include one or more available cells. In some examples, the network density requires that the one or more available cells continuously operate in an activated state. Whereas, in other examples, the one or more available cells may operate in an activated state in instances in which their resources are not being used or not be used at such a level so as to warrant continued operation in an activated state.

### Summary

In some example embodiments, a method of controlling a cell state is provided that comprises receiving an indication of a discovery of a cell from a communication device. The method of this embodiment includes determining the cell based on the indication. The method of this embodiment also includes causing the cell to transition to an activated state from a dormant state.

In further example embodiments, an apparatus for controlling a cell state is provided that includes a processing system, which may be embodied by a processor and a memory arranged to store computer readable instructions. The processing system is arranged to cause the apparatus to at least receive an indication of a discovery of a cell from a communication device. The processing system is arranged to cause the apparatus to determine the cell based on the indication. The processing system is also arranged to cause the apparatus to cause the cell to transition to an activated state from a dormant state.

In yet further example embodiments, a computer program product may be provided for controlling a cell state that includes at least one non-transitory computer-readable storage medium having computer-readable program instructions stored therein with the computer-readable program instructions including program instructions configured to receive an indication of a discovery of a cell from a communication device. The computer-readable program instructions include program instructions configured to determine the cell based on the indication. The computer-readable program instructions also include program instructions configured to cause the cell to transition to an activated state from a dormant state.

In some example embodiments, a method of controlling a cell state is provided that comprises generating a measurement report relating to a cell. The method of this embodiment also includes causing the measurement report to be transmitted. In some example embodiments, the measurement report is configured to cause the cell to transition from a dormant state to an activated state.

In further example embodiments, an apparatus for controlling a cell state is provided that includes a processing system arranged to cause the apparatus to at least generate a measurement report relating to a cell. The processing system is also arranged to cause the apparatus to cause the measurement report to be transmitted. In some example embodiments, the measurement report is configured to cause the cell to transition from a dormant state to an activated state.

In yet further example embodiments, a computer program product is provided for controlling a cell state that includes at least one non-transitory computer-readable storage medium having computer-readable program instructions stored therein with the computer-readable program instructions including program instructions configured to generate a measurement report relating to a cell. The computer-readable program instructions also include program instructions configured to cause the measurement report to be transmitted. In some example embodiments, the measurement report is configured to cause the cell to transition from a dormant state to an activated state.

In some example embodiments, a method of controlling a cell state is provided that comprises receiving an indication of scheduled data. In some example embodiments, the indication is provided by a base station based on a measurement report. The method of this embodiment also includes transitioning from a dormant state to an activated state. The method of this embodiment also includes causing a communication of the scheduled data via a corresponding carrier on a communication device.

In further example embodiments, an apparatus for controlling a cell state is provided that includes a processing system arranged to cause the apparatus to at least receive an indication of scheduled data. In some example embodiments, the indication is provided by a base station based on a measurement report. The processing system is also arranged to cause the apparatus to transition from a dormant state to an activated state. The processing system is also arranged to cause the apparatus to cause a communication of the scheduled data via a corresponding carrier on a communication device.

In yet further example embodiments, a computer program product is provided for controlling a cell state that includes at least one non-transitory computer-readable storage medium having computer-readable program instructions stored therein with the computer-readable program instructions including program instructions configured to receive an indication of scheduled data. In some example embodiments, the indication is provided by a base station based on a measurement report. The computer-readable program instructions also include program instructions configured to transition from a dormant state to an activated state. The computer-readable program instructions also include program instructions configured to cause a communication of the scheduled data via a corresponding carrier on a communication device.

### Brief Description of the Drawings

Having thus described the example embodiments of the invention in general terms, reference will now be made to the accompanying drawings, which are not necessarily drawn to scale, and wherein:
Figure 1 is a schematic representation of a system having, for example, a mobile terminal that may benefit from some example embodiments of the present invention;
Figure 2 is a block diagram of an apparatus that may be embodied by a base station in accordance with some example embodiments of the present invention;
Figures 3 and 4 are flow charts illustrating operations (performed e.g. by an example base station) in accordance with some example embodiments of the present invention;
Figures 5 and 6 are flow charts illustrating example operations (performed e.g.
   by an example mobile terminal) in accordance with some example embodiments of the present invention; and
Figure 7 is a flow chart illustrating example operations performed by an example cell, such as an NCT cell, in accordance with some example embodiments of the present invention.

### Detailed Description

The present invention now will be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

As used in this application, the term "circuitry" refers to all of the following: (a)hardware-only circuit implementations (such as implementations in only analog and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in server, a cellular network device, or other network device.

In some example embodiments, the method, apparatus and computer program product as described herein is configured for cell, such as an NCT cell, cells with a Physical Discovery Channel (PDCH) signal (e.g. beacon channel or any other type of signals with periodicity that can be used to discover a cell) or the like, Discontinuous Transmission (DTX). In some examples, a cell operating in a dormant state may be caused to transition to an activated state in response to one or more received measurements, resources requests and/or the like.

In some example embodiments, one or more neighboring base stations are configured to coordinate (e.g. via X2 interface) cell cycle configuration (e.g. a dormant period and a short active period) between each other. Coordination may occur, in some examples, because cells operate on different cell cycles regardless of communication devices handover or cell re-selection specific needs. As such and in some examples, the sharing of the cell cycle configuration may be used to avoid inter-cell interference.

In some example embodiments, a communications device, may receive (e.g. via dedicated signaling) the cell cycle configuration from a base station and, then, using the cell cycle configuration, may measure a physical channel (e.g. the Physical Discovery Channel (PDCH)) for cell discovery. Upon discovery of a cell, the communication device may be configured to, in some examples, cause a cell activation report (e.g. a received signal received power (RSRP)-based secondary cell measurement report) to be transmitted to a base station during, in some examples, the short active period of the identified cell.

In some examples, the cell activation report may include a cell identification (e.g. physical cell identifier (ID) physDiscoverySCellId of the NCT cell) and the cell cycle configuration (e.g. DormantSCellCycle) during which the cell discovery signal was detected in the NCT cell activation report to enhance identification of the NCT cell. For example, in an instance in which two cells aggregated with different primary cells, but have the same PDCH configured, the connected communication device may still differentiate between them based on the timing of their respective short active periods when the PDCH was detected.

In further example embodiments, flexible carrier aggregation may be configured to transition a cell from a dormant state to an activated state based on the cell activation report. In some examples, a corresponding carrier on the communication device is also caused to be activated.

In some example embodiments, the communications device may include a buffer status report or a scheduling request in the cell activation report to the base station. In some examples, the buffer status report or the scheduling request may then trigger the cell to transition to an activated mode if the buffer status report or the scheduling request identifies more resources than can be provided during the active period of the cell (e.g. the short active mode in the identified cell cycle).

In some example embodiments, a communication device may indicate, such as via L1 signaling, a secondary cell signal strength based on a channel state indicator (CSI) measurement and/or report configuration. The communications device may further be configured with a virtual secondary cell that is configured to correspond to, associate with or otherwise identify a discovered cell in a dormant state. Consequently, the CSI measurement and/or report may be redefined as dormant cell measurement and report configuration. As such, once the cell is detected and reported, such as via the cell activation report, the virtual secondary cell can be re-configured by the base station, network or the like, in some examples, to a real secondary cell (e.g. NCT secondary cell). Alternatively or additionally, an additional virtual secondary cell may then be assigned to the communication device.

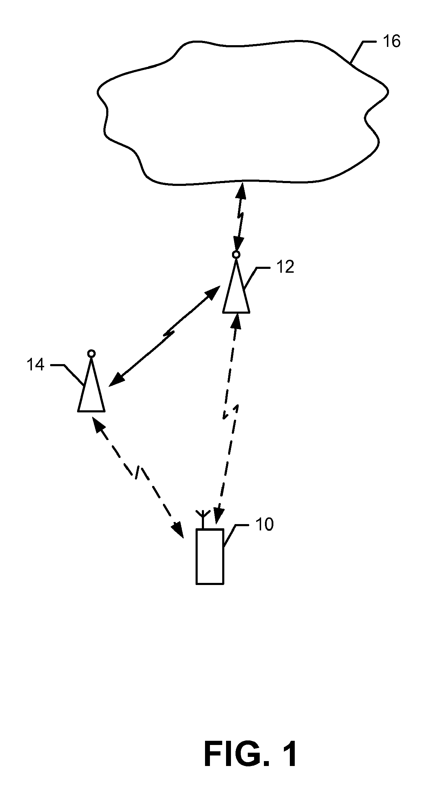

Although the method, apparatus and computer program product as described herein may be implemented in a variety of different systems, one example of such a system is shown in Figure 1, which includes a base station 12, such as a macro cell, a Node B, an enhanced Node B (eNB), a macro eNB, a coordination unit, a macro base station or other base station, and a base station 14, such as an NCT, a pico/femto cell, a secondary cell, a pico/femto eNB, a home eNB, an RRH, a LA cell, a closed subscriber group (CSG), a coordination unit, a micro base station or other base station. A communications device 10 may be configured to connect to a network 16 via the base station 12 or the base station 14.

When referred to herein, a serving cell includes, but is not limited to a primary serving cell (PCell) and other serving cells such as secondary serving cells (SCell) that may be operating on a base station, such as the base station 12 or the base station 14. A PCell, which may be embodied by a base station, generally includes, but is not limited to, a cell that is configured to perform initial establishment procedures, security procedures, system information (SI) acquisition and change monitoring procedures on the broadcast channel (BCCH) or data channel (PDCCH), and paging. The SCell may be embodied by a remote radio head (RRH) and is configured to provide additional radio resources to the PCell.

While the network 16 may be configured in accordance with long term evolution (LTE™) or LTE-Advanced (LTE-A™), other networks may support the method, apparatus and computer program product of embodiments of the present invention including those configured in accordance with wideband code division multiple access (W-CDMA™), CDMA2000, global system for mobile communications (GSM™), general packet radio service (GPRS™), IEEE 802.11 standard for wireless fidelity (WiFi™), wireless local access network (WLAN™) Worldwide Interoperability for Microwave Access (WiMAX™) protocols, and/or the like.

The network 16 may include a collection of various different nodes, devices or functions that may be in communication with each other via corresponding wired and/or wireless interfaces. For example, the network may include one or more cells, including the base station 12 which may serve a respective coverage area and a base station 14 that may serve a subset of the respective coverage area of base station 12. The base station 14 may be further configured to serve an area outside of the coverage area of the first base station. The base station 12 could be, for example, part of one or more cellular or mobile networks or public land mobile networks (PLMNs). The base station 14 may be configured to configure and/or operate extension carriers. As used herein, extension carriers are carriers which can be configured as part of a SCell and may operate in conjunction with a backward compatible PCell. In turn, other devices such as processing devices (e.g., personal computers, server computers or the like) may be coupled to the communication device 10 and/or other communication devices via the network.

A communication device, such as the communication device 10 (also known as user equipment (UE), a mobile terminal or the like), may be in communication with other communication devices or other devices via the base station 12 and/or the base station 14, in turn, the network 16. In some cases, the communication device 10 may include an antenna for transmitting signals to and for receiving signals from the base station 12 and/or the base station 14.

In some example embodiments, the communication device 10 may be a mobile communication device such as, for example, a mobile telephone, portable digital assistant (PDA), pager, laptop computer, STA, or any of numerous other hand held or portable communication devices, computation devices, content generation devices, content consumption devices, or combinations thereof.

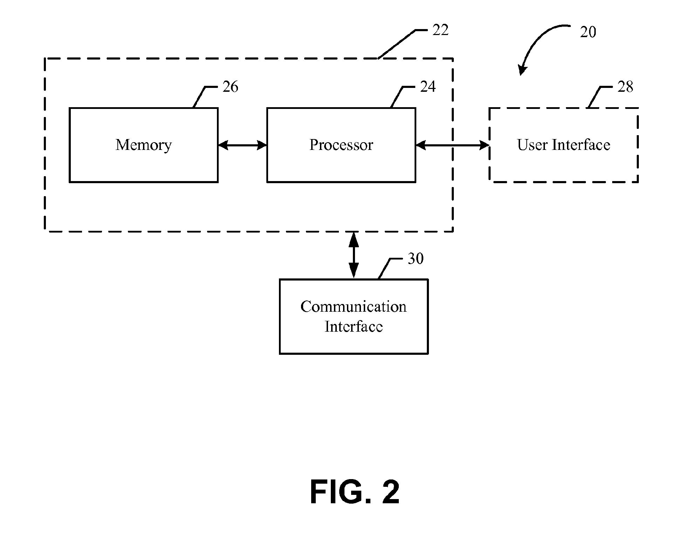

In one embodiment, for example, the base station 12, the base station 14 and/or communication device 10 may be embodied as or otherwise include an apparatus 20 as generically represented by the block diagram of Figure 2. While the apparatus 20 may be employed, for example, by a communication device 10, a base station 12 and/or the base station 14, it should be noted that the components, devices or elements described below may not be mandatory and thus some may be omitted in certain embodiments. Additionally, some embodiments may include further or different components, devices or elements beyond those shown and described herein.

As shown in Figure 2, the apparatus 20 may include or otherwise be in communication with processing circuitry 22 that is configurable to perform actions in accordance with example embodiments described herein. The processing circuitry may be configured to perform data processing, application execution, NCT detection and/or activation, generating measurements and reports, and/or other processing and management services according to an example embodiment of the present invention. In some embodiments, the apparatus or the processing circuitry may be embodied as a chip or chip set. In other words, the apparatus or the processing circuitry may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus or the processing circuitry may therefore, in some cases, be configured to implement an embodiment of the present invention on a single chip or as a single "system on a chip." As such, in some cases, a chip or chipset may constitute means for performing one or more operations for providing the functionalities described herein. Alternatively or additionally, a processing system may be embodied by or have similar functionality to the processing circuitry 22.

In an example embodiment, the processing circuitry 22 may include a processor 24 and memory 26 that may be in communication with or otherwise control a communication interface 30 and, in some cases, a user interface 28. As such, the processing circuitry may be embodied as a circuit chip (e.g., an integrated circuit chip) configured (e.g., with hardware, software or a combination of hardware and software) to perform operations described herein. However, in some embodiments taken in the context of the communication device 10, the processing circuitry may be embodied as a portion of a mobile computing device or other mobile terminal.

The user interface 28 (if implemented) may be in communication with the processing circuitry 22 to receive an indication of a user input at the user interface and/or to provide an audible, visual, mechanical or other output to the user. As such, the user interface may include, for example, a keyboard, a mouse, a trackball, a display, a touch screen, a microphone, a speaker, and/or other input/output mechanisms. The apparatus 20 need not always include a user interface.

The communication interface 30 may include one or more interface mechanisms for enabling communication with other devices and/or networks. In some cases, the communication interface may be any means such as a device or circuitry embodied in either hardware, or a combination of hardware and software that is configured to receive and/or transmit data from/to a network 16 and/or any other device or module in communication with the processing circuitry 22, such as between the base station 12 and the base station 14. In this regard, the communication interface 30 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods.

In an example embodiment, the memory 26 may include one or more non-transitory memory devices such as, for example, volatile and/or non-volatile memory that may be either fixed or removable. The memory may be configured to store information, data, applications, instructions or the like for enabling the apparatus 20 to carry out various functions in accordance with example embodiments of the present invention. For example, the memory may be configured to buffer input data for processing by the processor 24. Additionally or alternatively, the memory could be configured to store instructions for execution by the processor. As yet another alternative, the memory may include one of a plurality of databases that may store a variety of files, contents or data sets. Among the contents of the memory, applications may be stored for execution by the processor in order to carry out the functionality associated with each respective application. In some cases, the memory may be in communication with the processor 24 via a bus for passing information among components of the apparatus.

The processor 24 may be embodied in a number of different ways. For example, the processor 24 may be embodied as various processing means such as one or more of a microprocessor or other processing element, a coprocessor, a controller or various other computing or processing devices including integrated circuits such as, for example, an application specific integrated circuit (ASIC), an field programmable gate array (FPGA), or the like. In an example embodiment, the processor may be configured to execute instructions stored in the memory 26 or otherwise accessible to the processor. As such, whether configured by hardware or by a combination of hardware and software, the processor may represent an entity (e.g., physically embodied in circuitry - in the form of processing circuitry 22) capable of performing operations according to embodiments of the present invention while configured accordingly. Thus, for example, when the processor is embodied as an ASIC, FPGA or the like, the processor may be specifically configured hardware for conducting the operations described herein. Alternatively, as another example, when the processor is embodied as an executor of software instructions, the instructions may specifically configure the processor to perform the operations described herein.

In some example embodiments, the cell, such as base station 14, may follow a particular cell cycle that comprises a dormant period and a short active period. The short active period is generally configured to provide limited resources to connected communications devices.

As described above, one or more base stations may coordinate cell cycles so that cells in a coverage area are configured to have different cell cycles so that the short active periods of neighboring cells occur at different time intervals. As such, the base station may be operable to configure the cell cycles for each cell. In some example embodiments, the active period may include PDCH and Reduced Common Reference Signal (RCRS).

In some example embodiments, the identification of cell and/or the cell cycle configuration may be indicated in an information element (IE) transmitted, such as via the communications interface 30, by the base station 12. In some example embodiments, the indication of a cell cycle may be provided in a dormantSCellCycle radio resource control (RRC) IE included in a SCellToAddMod-r12 IE in RRCConnectionReconfiguration message via the primary cell carrier (PCC). Alternatively or additionally, the indication of a cell cycle may be provided by the sCellIndex-r10 in SCellToAddMod-r10 IE in RRCConnectionReconfiguration message that includes the PhysCellId and the ARFCN-ValueEUTRA.

In some example embodiments, the cell ID may be based on the PDCH and also indicated by a physDiscoverySCellId RRC IE included in the SCellToAddMod-r12 IE. An example, SCellToAddMod-r12 includes but is not limited to:

```
SCellToAddMod-r12 ::= SEQUENCE {
        sCellIndex-r12         SCellIndex-r12,
        cellIdentification-r12         SEQUENCE {
               physDiscoverySCellId
        PhysDiscoverySCellId,
               dl-CarrierFreq-r12         ARFCN-
 ValueEUTRA
               dormantSCellCycle
        DormantSCellCycle,
            }
```

In some example embodiments, the communications device is configured to conduct measurements, such as via the processing circuitry 22, the processor 24, the communications interface 30 or the like, of one or more cells, such as one or more cells during the short active period of the one or more cells. In some examples, the communications device may be configured to measure cells by including the physDiscoveryCellId-r12 RRC IE in the measObjectEUTRA RRC IE. For example:

```
-- ASN1START
 MeasObjectEUTRA ::        = SEQUENCE {
        carrierFreq         ARFCN-
 ValueEUTRA,
        allowedMeasBandwidth         AllowedMeasBandwidth,
       presenceAntennaPort1         PresenceAntennaPort1,
        neighCellConfig         NeighCellConfig,
        offsetFreq         Q-OffsetRange
                    DEFAULT dB0,
        -- Cell list
        cellsToRemoveList         CellIndexList
               OPTIONAL, -- Need ON
        cellsToAddModList         CellsToAddModList
               OPTIONAL, -- Need ON SCellToAddMod-r12
                       SCellsToAddModList         OPTIONAL, --
 Need ON
        -- Black list
       blackCellsToRemoveList         CellIndexList
               OPTIONAL,         -- Need ON
       blackCellsToAddModList
        BlackCellsToAddModList OPTIONAL,         -- Need ON
        cellForWhichToReportCGI         PhysCellId
                       OPTIONAL,         -- Need ON
        ...,
        [[measCycleSCell-r10         MeasCycleSCell-r10
        OPTIONAL, --         Need ON
               measSubframePatternConfigNeigh-r10
        MeasSubframePatternConfigNeigh-r10         OPTIONAL-- Need ON
        ]]
 }
 CellsToAddModList ::=         SEQUENCE (SIZE
 (1..maxCellMeas)) OF CellsToAddMod
 CellsToAddMod ::= SEQUENCE {
        cellIndex         INTEGER
 (1..maxCellMeas),
       physCellId         PhysCellId,
        cellIndividualOffset         Q-OffsetRange
 }
 SCellsToAddModList ::=         SEQUENCE (SIZE
 (1..maxSCellMeas)) OF SCellsToAddMod
 SCellToAddMod-r12 ::=         SEQUENCE {
        sCellIndex-r12 SCellIndex-r12,
        cellIdentification-r12 SEQUENCE {
               physDiscoverySCellId
        PhysDiscoverySCellId,
               dl-CarrierFreq-r12         ARFCN-
 ValueEUTRA
               dormantCellCycle
        DormantCellCycle,
 }
 BlackCellsToAddModList ::=         SEQUENCE         (SIZE
 (1..maxCellMeas)) OF BlackCellsToAddMod
 BlackCellsToAddMod ::=         SEQUENCE {
        cellIndex         INTEGER
 (1..maxCellMeas),
       physCellIdRange         PhysCellIdRange
 }
 MeasCycleSCell-r10 ::=         ENUMERATED {sf160, sf256,
 sf320, sf512,
               sf640, sf1024, sf1280, spare1}
 MeasSubframePatternConfigNeigh-r10 ::= CHOICE {
       release                         NULL,
        setup
        SEQUENCE {
               measSubframePatternNeigh-r10
        MeasSubframePattern-r10,
               measSubframeCellList-r10
        MeasSubframeCellList-r10 OPTIONAL -- Cond measSubframe
        }
 }
 MeasSubframeCellList-r10::= SEQUENCE (SIZE (1..maxCellMeas)) OF
 PhysCellIdRange
 -- ASN1STOP
```

Alternatively or additionally, an example measurement configuration applicable for a communications device in RRC_CONNECTED in may be accomplished via RRC signaling in measConfig RRC IE in the RRCConnectionReconfiguration message. The communications device may then be configured to perform measurements for cells listed in the cellsToAddModList RRC IE in the measObjectEUTRA RRC IE in the measObjectToAddModList in measConfig RRC IE.

In some example embodiments, the communications device 10 is configured to be triggered or otherwise caused, such as by a base station, the network or the like, to conduct measurements for one or more cells. In some examples, the one or more cells may be identified by the IE MeasId to identify a measurement configuration (e.g. linking of a measurement object and a reporting configuration). In some examples, measurement report triggering may accomplished based on measurement triggering report event6 as configured in the reportConfigEUTRA RRC IE in the reportConfigToAddModList RRC IE in measConfig RRC IE. Alternatively or additionally, the connected communications device may report the measurements for cells periodically as configured in the reportInterval in the reportConfigEUTRA RRC IE. Consequently, the communication device 10 may then cause the cell activation report (e.g. measurement report) to be transmitted determine, such as via the processing circuitry 22, the processor 24, the communications interface 30 or the like.

In some example embodiments, the base station may receive the transmitted cell activation report. In response, the base station may determine, such as via the processing circuitry 22, the processor 24, the communications interface 30 or the like, that there are not enough resources available on the cell during the short active period to schedule the communications device that transmitted the cell activation report. As such, the base station may request additional information be provided in the cell activation report (e.g. more than the measured RSRP). In some examples, the base station may request or and/or the communications device may include a buffer status report (BSR) or a scheduling request (SR) in the cell activation report.

In an instance in which the communications device requests or otherwise requires more resources than are configured to be provided during the short active mode based on the BSR report or SR report, the base station may determine a cell to transition to an activated state, such as via the processing circuitry 22, the processor 24, the communications interface. In some examples, the base station selects the cell, such as via the processing circuitry 22, the processor 24, or the like, with the highest RSRP value reported (e.g. strongest cell) when compared to other cells in the coverage area, compared to a threshold or the like.

Alternatively or additionally, in some example embodiments, a communications device may be configured with a virtual secondary cell for the purpose of cell detection and reporting. In some examples, a communications device may be semi-statically configured by a higher layer based on RRC IEs (e.g. CQI-ReportConfig to periodically feedback different CSI for wideband CQI (mode 1-0) or subband CQI (mode 2-0) without PMI on the PUCCH on the macro-layer cell (e.g. primary cell) for the non-serving cells currently in short active mode. As the communication device may be attached to the macro-layer cell or a serving cell in active mode, the non-serving cells in short active mode may then be referred to as a virtual Scell, in some example embodiments.

In some example embodiments, the base station may then be operable to configure a set of possible identification signal/sequence (e.g., N possible sequences), and a virtual CSI report configuration (e.g., report period, PUCCH resource to use and/or the like). Alternatively or additionally, a CSI configuration and report mechanism for Scell in carrier aggregation can be reused or otherwise repurposed, in some example embodiments.

In some example embodiments, the communication device may search the possible identification sequences, and in an instance in which one or more cells are detected, the communication device may be configured to report (e.g. cell activation report) the detected cell ID physDiscoverySCellId (e.g., log₂(*N*) bit), such as by using a virtual CSI report configuration. In some examples, the estimation of cell strength may also be reported by the communication device. For example, a report may include but is not limited to the following indications: 11 bit payload in Physical Uplink Control Channel (PUCCH) format 2 -> four bits identification sequence index for 16 possible cells and 7 bits for cell strength. If more than one cell is detected, the strongest cell may be reported. Alternatively or additionally, an aperiodic CSI may also be used in some example embodiments.

In some examples, the cell activation report may be signaled via L1 signaling. Alternatively or additionally, the report may also be based on reportConfigEUTRA RRC IE in the reportConfigToAddModList RRC IE in measConfig RRC IE.

In some examples and in response to the report from the communications device, the base station may use the cell cycle configuration (e.g. DormantSCellCycle) during which the cell discovery signal was detected by the communication device to further identify the cell (e.g. based on the physDiscoverySCellId and the DormantSCellCycle). Alternatively or additionally, the latter may not need to be reported on the PUCCH since the PUCCH resource timing is known implicitly by the macro-layer cell based on higher-layer PUCCH configuration.

By way of further example and in the case of single communications device, a first cell may be in an activated state whereas a second cell may be in a dormant state. As such, in an instance in which a communications device moves out of the coverage area of the first cell and into the coverage area of the second cell, the base station, such as base station 12, may determine, such as the processing circuitry 22, the processor 24 or the like, to return first cell to dormant state and transition the second cell to an activated state. Alternatively or additionally, the base station may be configured to transmit data to communication device on the cell that is measured (e.g. carrier aggregation of macro PCell with activated Scell), if communication device can identify or otherwise discover the cell, then it may be determined that the communication device as good coverage to the cell.

By way of further example, there may be two small neighboring base stations within a house, where neither base station provides adequate coverage over the whole house. As such, in this example, intra-frequency handover may be needed even if the communications devices are not likely to step in and out of a coverage area for a given base station often. Hence, to save energy and minimize interference to other base stations, (e.g. base stations in neighboring houses) an unused base station may be configured to enter dormant state.

In an example in which there are two or more communications devices, the macro-layer cell, such as base station 12, may be configured to determine which cells to have in the dormant state based on whether the two or more communications devices are within coverage of a first cell only, a second cell only, or within the coverage area of both the first cell and the second cell. Alternatively or additionally and depending on the QoS Class Identifier (QCI), a base station may maintain acceptable service of a communications device on the macro-cell layer outside the short active mode of a cell within coverage.

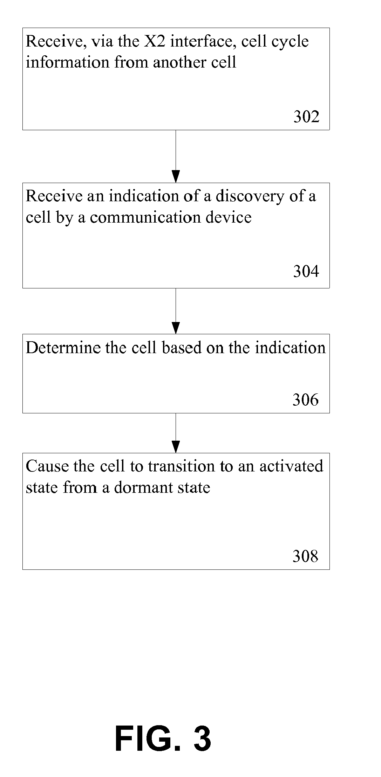

Figures 3 - 7 illustrate example operations performed by a method, apparatus and computer program product, such as apparatus 20 of Figure 2 in accordance with one embodiment of the present invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 26 of an apparatus employing an embodiment of the present invention and executed by a processor 24 in the apparatus. As will be appreciated, any such computer program instructions may be loaded onto a computer or other programmable apparatus (e.g., hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of Figures 3 - 7, when executed, convert a computer or processing circuitry into a particular machine configured to perform an example embodiment of the present invention. Accordingly, the operations of Figures 3 - 7 define an algorithm for configuring a computer or processing circuitry 22, e.g., processor, to perform an example embodiment. In some cases, a general purpose computer may be provided with an instance of the processor which performs the algorithm of Figures 3 - 7 to transform the general purpose computer into a particular machine configured to perform an example embodiment.

Accordingly, blocks of the flowcharts support combinations of means for performing the specified functions and combinations of operations for performing the specified functions. It will also be understood that one or more blocks of the flowchart, and combinations of blocks in the flowcharts, can be implemented by special purpose hardware-based computer systems which perform the specified functions, or combinations of special purpose hardware and computer instructions.

In some embodiments, certain ones of the operations above may be modified or further amplified as described below. Moreover, in some embodiments additional optional operations may also be included. It should be appreciated that each of the modifications, optional additions or amplifications below may be included with the operations above either alone or in combination with any others among the features described herein.

Figure 3 is a flow chart illustrating operations performed by a base station, an eNB or the like, such as by the processing circuitry 22, the processor 24, the communication interface 30 or the like, in accordance with some example embodiments of the present invention. At operation 302, the apparatus 20 embodied, for example, by a base station, such as base station 12 or base station 14, may include means, such as the processing circuitry 22, the processor 24, the communications interface 30 or the like, for receiving, via the X2 interface, cell cycle configuration from another cell, wherein the received cell cycle configuration is operable to reduce interference. In some examples, the processing circuitry 22, the processor 24, the communications interface 30 or the like may cause cell cycle configuration to be transmitted to another cell, via an X2 interface, wherein the cell cycle configuration indicates the activated state and dormant state configuration. In some examples, the exchange of cell information may advantageously, in some example, help to mitigate interference between cells that have an overlapping coverage area.

At operation 304, the apparatus 20 embodied, for example, by a base station, such as base station 12 or base station 14, may include means, such as the processing circuitry 22, the processor 24, the communications interface 30 or the like, for receiving an indication of a discovery of a cell by a communication device. In some examples, the received indication from the communications devices is a cell activation report that comprises a cell identification and a cell cycle configuration. In some examples, the cell activation report comprises at least one of a buffer status report or a scheduling request. In yet further examples, the cell activation report may take the form of or otherwise be signaled by a reference signal received power measurement report.

At operation 306, the apparatus 20 embodied, for example, by a base station, such as base station 12 or base station 14, may include means, such as the processing circuitry 22, the processor 24, or the like, for determining the cell based on the indication. In some examples, the cell may be identified based on its cell identification and its cell cycle configuration. At operation 308, the apparatus 20 embodied, for example, by a base station, such as base station 12 or base station 14, may include means, such as the processing circuitry 22, the processor 24, the communications interface 30 or the like, for causing the cell to transition to an activated state from a dormant state.

In some example embodiments, the processing circuitry 22, the processor 24, or the like may further be configured to determine that a short active period of the cell does not comprise sufficient resources for the communication device based on the at least one of the buffer status report or the scheduling request. As such, the processing circuitry 22, the processor 24, or the like may determine a cell to transition to the activated state in an instance in which the cell comprises sufficient resources for the communication device. In some examples, sufficient resources may be based on a predetermined threshold or further may be determined based on the buffer status report or a scheduling request (e.g. based on the number of packets in the buffer of the communications device).

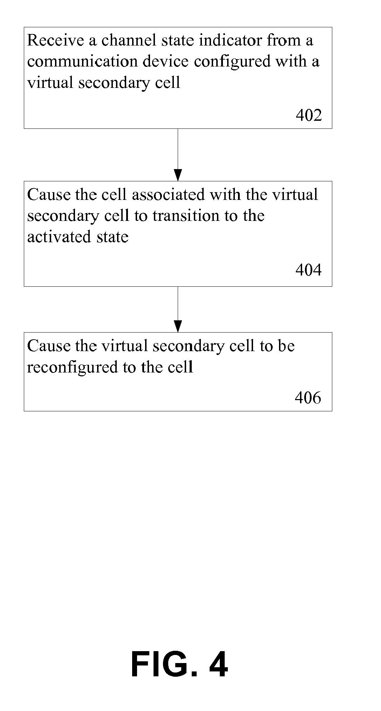

Figure 4 is a flow chart illustrating operations performed by a base station, an eNB or the like (or part of the base station or the eNB), such as by the processing circuitry 22, the processor 24, the communication interface 30 or the like, in accordance with some example embodiments of the present invention. At operation 402, the apparatus 20 embodied, for example, by a base station, such as base station 12 or base station 14, may include means, such as the processing circuitry 22, the processor 24, the communications interface 30 or the like, for receiving a channel state indicator from a communication device configured with a virtual secondary cell. In some example embodiments, the channel state indicator is signaled via L1 signaling. At operation 404, the apparatus 20 embodied, for example, by a base station, such as base station 12 or base station 14, may include means, such as the processing circuitry 22, the processor 24, the communications interface 30 or the like, for causing the cell associated with the virtual secondary cell to transition to the activated state. At operation 406, the apparatus 20 embodied, for example, by a base station, such as base station 12 or base station 14, may include means, such as the processing circuitry 22, the processor 24, the communications interface 30 or the like, for causing the virtual secondary cell to be reconfigured to the cell.

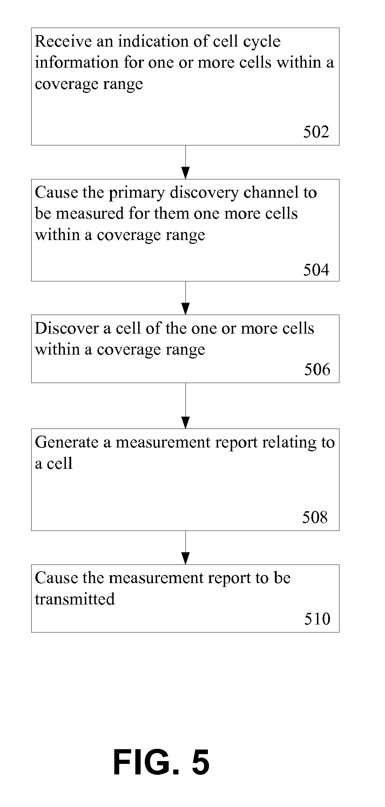

Figure 5 is a flow chart illustrating operations performed by a communications device, a UE, or part of the UE (e.g. a modem) or the like, such as by the processing circuitry 22, the processor 24, the communication interface 30 or the like, in accordance with some example embodiments of the present invention. At operation 502, the apparatus 20 embodied, for example, by a communications device, such as communications device 10, may include means, such as the processing circuitry 22, the processor 24, the communications interface 30 or the like, for receiving an indication of cell cycle configuration for one or more cells within a coverage range. At operation 504, the apparatus 20 embodied, for example, by a communications device, such as communications device 10, may include means, such as the processing circuitry 22, the processor 24, the communications interface 30 or the like, for causing the primary discovery channel to be measured for them one more cells within a coverage range. At operation 506, the apparatus 20 embodied, for example, by a communications device, such as communications device 10, may include means, such as the processing circuitry 22, the processor 24, the communications interface 30 or the like, for discovering a cell of the one or more cells within a coverage range.

At operation 508, the apparatus 20 embodied, for example, by a communications device, such as communications device 10, may include means, such as the processing circuitry 22, the processor 24 or the like, for generating a measurement report relating to a cell. In some examples, the measurement report is a cell activation report that comprises a cell identification and a cell cycle configuration. In some examples, the cell activation report comprises at least one of a buffer status report or a scheduling request. In yet further examples, the cell activation report may take the form of or otherwise be signaled by a reference signal received power measurement report.

At operation 510, the apparatus 20 embodied, for example, by a communications device, such as communications device 10, may include means, such as the processing circuitry 22, the processor 24, the communications interface 30 or the like, for causing the measurement report to be transmitted. In some example embodiments, the measurement report is configured to cause the cell to transition from an activated state to a dormant state. Alternatively or additionally, the cell activation report comprises at least one of a buffer status report or a scheduling request may further cause a cell with sufficient resources to be transitioned to an active state.

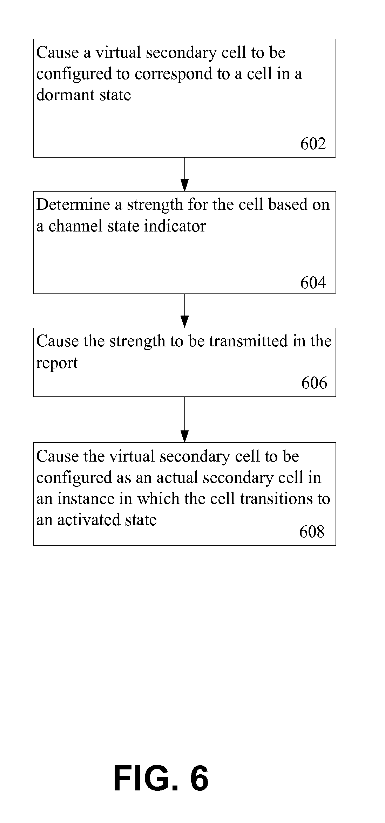

Figure 6 is a flow chart illustrating operations performed by a communications device, a UE, a modem or the like, such as by the processing circuitry 22, the processor 24, the communication interface 30 or the like, in accordance with some example embodiments of the present invention. At operation 602, the apparatus 20 embodied, for example, by a communications device, such as communications device 10, may include means, such as the processing circuitry 22, the processor 24, the communications interface 30 or the like, for causing a virtual secondary cell to be configured to correspond to a cell in a dormant state. At operation 604, the apparatus 20 embodied, for example, by a communications device, such as communications device 10, may include means, such as the processing circuitry 22, the processor 24, the communications interface 30 or the like, for determining a strength for the cell based on a channel state indicator. At operation 606, the apparatus 20 embodied, for example, by a communications device, such as communications device 10, may include means, such as the processing circuitry 22, the processor 24, the communications interface 30 or the like, for causing the strength to be transmitted in the report, wherein the report is signaled via L1 signaling and is configured to cause the cell to transition to an active state. At operation 608, the apparatus 20 embodied, for example, by a communications device, such as communications device 10, may include means, such as the processing circuitry 22, the processor 24, the communications interface 30 or the like, for causing the virtual secondary cell to be configured as an actual secondary cell in an instance in which the cell transitions to an activated state.

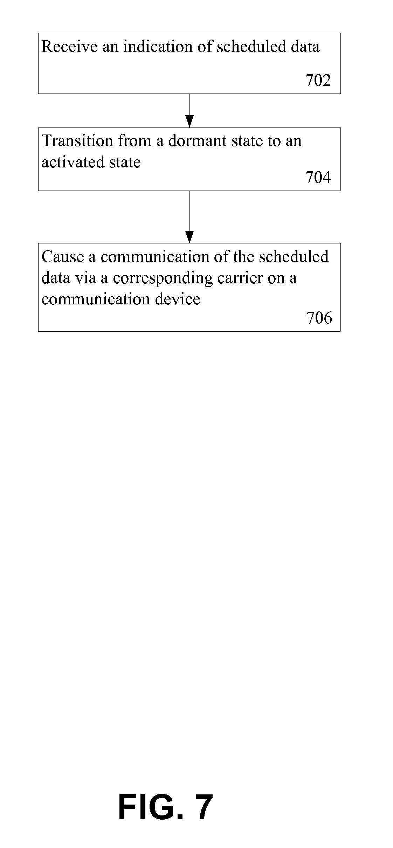

Figure 7 is a flow chart illustrating operations performed by a cell, such as an NCT cell or the like, such as by the processing circuitry 22, the processor 24, the communication interface 30 or the like, in accordance with some example embodiments of the present invention. At operation 702, the apparatus 20 embodied, for example, by a base station, such as base station 14 operating as a cell or part of the base station operating as a cell, may include means, such as the processing circuitry 22, the processor 24, the communications interface 30 or the like, for receiving an indication of scheduled data. In some examples, the indication is provided by a base station based on a measurement report. In some examples, the measurement report is a cell activation report that comprises a cell identification and a cell cycle configuration. In some examples, the cell activation report comprises at least one of a buffer status report or a scheduling request. In yet further examples, the cell activation report may take the form of or otherwise be signaled by a reference signal received power measurement report.

At operation 704, the apparatus 20 embodied, for example, by a base station, such as base station 14 operating as a cell, may include means, such as the processing circuitry 22, the processor 24, the communications interface 30 or the like, for transitioning from a dormant state to an activated state. At operation 706, the apparatus 20 embodied, for example, by a base station, such as base station 14 operating as a cell, may include means, such as the processing circuitry 22, the processor 24, the communications interface 30 or the like, for causing a communication of the scheduled data via a corresponding carrier on a communication device.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following numbered clauses set out further exemplary embodiments of the present invention:
1. A method of controlling a cell state, the method comprising:
   receiving an indication of a discovery of a cell from a communication device;
   determining the cell based on the indication; and
   causing the cell to transition to an activated state from a dormant state.
2. A method according to clause 1, further comprising:
   causing a cell cycle configuration to be transmitted to another cell, wherein the cell cycle configuration indicates a short active period for the cell.
3. A method according to clause 2, further comprising:
   receiving a cell cycle configuration from another cell.
4. A method according to any one of clauses 2 or 3, wherein the cell cycle configuration is transmitted or received via an X2 interface.
5. A method according to any one of clauses 1 to 4, wherein the indication of the discovery of the cell by the communication device is provided via a cell activation report.
6. A method according to clause 5, wherein the cell activation report comprises a cell identification and a cell cycle configuration during which a discovery signal for the cell was detected.
7. A method according to clause 5, wherein a discovery signal for the cell is detected during a short active period of the cell, wherein the short active period for the cell is determined based on the cell cycle configuration.
8. A method according to clause 5, wherein the cell activation report is signaled via a reference signal received power measurement report.
9. A method according to any one of clauses 5 to 8, wherein the cell activation report is received during the short active period of the cell.
10. A method according to any one of clauses 5 to 9, wherein the cell activation report comprises at least one of a buffer status report or a scheduling request.
11. A method according to clause 10, further comprising:
   determining that the short active period of the cell does not comprise resources for the communication device based on the at least one of the buffer status report or the scheduling request; and
   determining a cell to transition to the activated state in an instance in which the cell comprises resources for the communication device.
12. A method according to any one of clauses 1 to 11, further comprising:
   receiving a channel state indicator from the communication device configured with a virtual secondary cell, wherein the virtual secondary cell is associated with a discovered cell in the dormant state;
   causing the cell associated with the virtual secondary cell to transition to the activated state; and
      causing the virtual secondary cell to be reconfigured to the cell.
13. A method according to clause 12, wherein the channel state indicator is signaled via L1 signaling.
14. A method according to any one of clauses 1 to 13, further comprising:
   causing a carrier on the communication device corresponding to the cell to be activated.
15. A method according to any one of clauses 1 to 14, wherein the cell is a new carrier type cell.
16. An apparatus for controlling a cell state, the apparatus comprising:
   a processing system arranged to cause the apparatus to at least:
      receive an indication of a discovery of a cell from a communication device;
      determine the cell based on the indication; and
      cause the cell to transition to an activated state from a dormant state.
17. An apparatus according to clause 16, wherein the processing system is arranged to cause the apparatus to:
   cause a cell cycle configuration to be transmitted to another cell, wherein the cell cycle configuration indicates a short active period for the cell.
18. An apparatus according to clause 17, wherein the processing system is arranged to cause the apparatus to:
   receive a cell cycle configuration from another cell.
19. An apparatus according to any one of clauses 17 or 18, wherein the cell cycle configuration is transmitted or received via an X2 interface.
20. An apparatus according to any one of clauses 16 to 19, wherein the indication of the discovery of the cell by the communication device is provided via a cell activation report.
21. An apparatus according to clause 20, wherein the cell activation report comprises a cell identification and a cell cycle configuration during which a discovery signal for the cell was detected.
22. An apparatus according to clause 20, wherein a discovery signal for the cell is detected during a short active period of the cell, wherein the short active period for the cell is determined based on the cell cycle configuration.
23. An apparatus according to clause 20, wherein the cell activation report is signaled via a reference signal received power measurement report.
24. An apparatus according to any one of clauses 20 to 23, wherein the cell activation report is received during the short active period of the cell.
25. An apparatus according to any one of clauses 20 to 24, wherein the cell activation report comprises at least one of a buffer status report or a scheduling request.
26. An apparatus according to clause 25, wherein the processing system is arranged to cause the apparatus to:
   determine that the short active period of the cell does not comprise resources for the communication device based on the at least one of the buffer status report or the scheduling request; and
   determine a cell to transition to the activated state in an instance in which the cell comprises resources for the communication device.
27. An apparatus according to any one of clauses 16 to 27, wherein the processing system is arranged to cause the apparatus to:
   receive a channel state indicator from the communication device configured with a virtual secondary cell, wherein the virtual secondary cell is associated with a discovered cell in the dormant state;
   cause the cell associated with the virtual secondary cell to transition to the activated state; and
   cause the virtual secondary cell to be reconfigured to the cell.
28. An apparatus according to clause 27, wherein the channel state indicator is signaled via L1 signaling.
29. An apparatus according to any one of clauses 16 to 28, wherein the processing system is arranged to cause the apparatus to:
   cause a carrier on the communication device corresponding to the cell to be activated.
30. An apparatus according to any one of clauses 16 to 29, wherein the cell is a new carrier type cell.
31. An apparatus according to any one of clauses 16 to 30, wherein the apparatus comprises at least one of a base station, a node B or an enhanced node B.
32. An apparatus according to any one of clauses 16 to 31, wherein the apparatus is configured for use in at least one of global system for mobile communications, wideband code division multiple access, time division synchronous code division multiple access, a long term evolution or long term evolution advanced system.
33. A computer program product comprising a set of instructions for use in controlling a cell state, which, when executed by apparatus associated with the cell, causes the apparatus to
   receive an indication of a discovery of a cell from a communication device;
   determine the cell based on the indication; and
   cause the cell to transition to an activated state from a dormant state.
34. A computer program product according to clause 33, further comprising a set of instructions, which when executed by the apparatus, further cause the apparatus at least to:
   cause a cell cycle configuration to be transmitted to another cell, wherein the cell cycle configuration indicates a short active period for the cell.
35. A computer program product according to clause 34, further comprising a set of instructions, which when executed by the apparatus, further cause the apparatus at least to:
   receive a cell cycle configuration from another cell.
36. A computer program product according to any one of clauses 34 or 35, wherein the cell cycle configuration is transmitted or received via an X2 interface.
37. A computer program product according to any one of clauses 33 to 36, wherein the indication of the discovery of the cell by the communication device is provided via a cell activation report.
38. A computer program product according to clause 37, wherein the cell activation report comprises a cell identification and a cell cycle configuration during which a discovery signal for the cell was detected.
39. A computer program product according to clause 37, wherein a discovery signal for the cell is detected during a short active period of the cell, wherein the short active period for the cell is determined based on the cell cycle configuration.
40. A computer program product according to clause 37, wherein the cell activation report is signaled via a reference signal received power measurement report.
41. A computer program product according to any one of clauses 37 to 40, wherein the cell activation report is received during the short active period of the cell.
42. A computer program product according to any one of clauses 37 to 41, wherein the cell activation report comprises at least one of a buffer status report or a scheduling request.
43. A computer program product according to clause 42, further comprising a set of instructions, which when executed by the apparatus, further cause the apparatus at least to:
   determine that the short active period of the cell does not comprise resources for the communication device based on the at least one of the buffer status report or the scheduling request; and
   determine a cell to transition to the activated state in an instance in which the cell comprises resources for the communication device.
44. A computer program product according to any one of clauses 33 to 43, further comprising a set of instructions, which when executed by the apparatus, further cause the apparatus at least to:
   receive a channel state indicator from the communication device configured with a virtual secondary cell, wherein the virtual secondary cell is associated with a discovered cell in the dormant state;
   cause the cell associated with the virtual secondary cell to transition to the activated state; and
   cause the virtual secondary cell to be reconfigured to the cell.
45. A computer program product according to clause 44, wherein the channel state indicator is signaled via L1 signaling.
46. A computer program product according to any one of clauses 33 to 45, further comprising a set of instructions, which when executed by the apparatus, further cause the apparatus at least to:
   cause a carrier on the communication device corresponding to the cell to be activated.
47. A computer program product according to any one of clauses 33 to 46, wherein the cell is a new carrier type cell.
48. An apparatus for controlling a cell state, the apparatus comprising:
   means for receiving an indication of a discovery of a cell from a communication device;
   means for determining the cell based on the indication; and
   means for causing the cell to transition to an activated state from a dormant state.
49. An apparatus according to clause 48, further comprising:
   means for causing a cell cycle configuration to be transmitted to another cell, wherein the cell cycle configuration indicates a short active period for the cell.
50. An apparatus according to clause 49, further comprising:
   means for receiving a cell cycle configuration from another cell.
51. An apparatus according to any one of clauses 49 or 50, wherein the cell cycle configuration is transmitted or received via an X2 interface.
52. An apparatus according to any one of clauses 48 to 51, wherein the indication of the discovery of the cell by the communication device is provided via a cell activation report.
53. An apparatus according to clause 52, wherein the cell activation report comprises a cell identification and a cell cycle configuration during which a discovery signal for the cell was detected.
54. An apparatus according to clause 52, wherein a discovery signal for the cell is detected during a short active period of the cell, wherein the short active period for the cell is determined based on the cell cycle configuration.
55. An apparatus according to clause 52, wherein the cell activation report is signaled via a reference signal received power measurement report.
56. An apparatus according to any one of clauses 52 to 55, wherein the cell activation report is received during the short active period of the cell.
57. An apparatus according to any one of clauses 52 to 56, wherein the cell activation report comprises at least one of a buffer status report or a scheduling request.
58. An apparatus according to clause 57, further comprising:
   means for determining that the short active period of the cell does not comprise resources for the communication device based on the at least one of the buffer status report or the scheduling request; and
   means for determining a cell to transition to the activated state in an instance in which the cell comprises resources for the communication device.
59. An apparatus according to any one of clauses 48 to 58, further comprising:
   means for receiving a channel state indicator from the communication device configured with a virtual secondary cell, wherein the virtual secondary cell is associated with a discovered cell in the dormant state;
   means for causing the cell associated with the virtual secondary cell to transition to the activated state; and
   means for causing the virtual secondary cell to be reconfigured to the cell.
60. An apparatus according to clause 59, wherein the channel state indicator is signaled via L1 signaling.
61. An apparatus according to any one of clauses 48 to 60, further comprising:
   means for causing a carrier on the communication device corresponding to the cell to be activated.
62. An apparatus according to any one of clauses 48 to 61, wherein the cell is a new carrier type cell.
63. An apparatus according to any one of clauses 48 to 62, wherein the apparatus comprises at least one of a base station, a node B or an enhanced node B.
64. An apparatus according to any one of clauses 48 to 63, wherein the apparatus is configured for use in at least one of global system for mobile communications, wideband code division multiple access, time division synchronous code division multiple access, a long term evolution or long term evolution advanced system.
65. A method of controlling a cell state, the method comprising:
   generating a measurement report relating to a cell; and
   causing the measurement report to be transmitted, wherein the measurement report is configured to cause the cell to transition from a dormant state to an activated state.
66. A method according to clause 65, further comprising:
   receiving an indication of cell cycle configuration for one or more cells within a coverage range;
   causing a primary discovery channel to be measured for the one or more cells within the coverage range; and
   discovering a cell of the one or more cells within the coverage range.
67. A method according to any one of clauses 65 or 66, wherein the measurement report is a cell activation report.
68. A method according to clause 67, wherein the cell activation report comprises a cell identification and a cell cycle configuration during which a discovery signal for the cell was detected.
69. A method according to clause 67, wherein the cell is discovered during a short active period of the cell, wherein the short active period of the cell is defined by the cell cycle configuration.
70. A method according to clause 67, wherein the cell activation report is signaled via a reference signal received power measurement report.
71. A method according to clause 67, further comprising:
   generating at least one of a buffer status report or a scheduling request; and
   causing the at least one of the buffer status report or the scheduling request to be included in the cell activation report, wherein the at least one of the buffer status report or the scheduling request is configured to cause a cell with resources to be activated.
72. A method according to any one of clauses 65 to 71, further comprising:
   causing a virtual secondary cell to be configured to correspond to a cell in a dormant state; and
   causing the virtual secondary cell to be configured as an actual secondary cell in an instance in which the cell is caused to transition to the activated state.
73. A method according to clause 72, further comprising:
   determining a strength for the cell based on a channel state indicator; and
   causing the strength to be transmitted in the measurement report, wherein the measurement report is configured to cause the cell to transition to an active state.
74. A method according to clause 73, wherein the channel state indicator is signaled via L1 signaling.
75. A method according to any one of clauses 65 to 74, further comprising:
   causing a carrier corresponding to the cell to be activated.
76. A method according to any one of clauses 65 to 75, wherein the cell is a new carrier type cell.
77. An apparatus for controlling a cell state, the apparatus comprising:
   a processing system arranged to cause the apparatus to at least:
      generate a measurement report relating to a cell; and
      cause the measurement report to be transmitted, wherein the measurement report is configured to cause the cell to transition from a dormant state to an activated state.
78. An apparatus according to clause 77, wherein the processing system is arranged to cause the apparatus to:
   receive an indication of cell cycle configuration for one or more cells within a coverage range;
   cause a primary discovery channel to be measured for the one or more cells within the coverage range; and
   discover a cell of the one or more cells within the coverage range.
79. An apparatus according to any one of clauses 77 or 78, wherein the measurement report is a cell activation report.
80. An apparatus according to clause 79, wherein the cell activation report comprises a cell identification and a cell cycle configuration during which a discovery signal for the cell was detected.
81. An apparatus according to clause 79, wherein the cell is discovered during a short active period of the cell, wherein the short active period of the cell is defined by the cell cycle configuration.
82. An apparatus according to clause 79, wherein the cell activation report is signaled via a reference signal received power measurement report.
83. An apparatus according to clause 79, wherein the processing system is arranged to cause the apparatus to:
   generate at least one of a buffer status report or a scheduling request; and
   cause the at least one of the buffer status report or the scheduling request to be included in the cell activation report, wherein the at least one of the buffer status report or the scheduling request is configured to cause a cell with resources to be activated.
84. An apparatus according to any one of clauses 77 to 83, wherein the processing system is arranged to cause the apparatus to:
   cause a virtual secondary cell to be configured to correspond to a cell in a dormant state; and
   cause the virtual secondary cell to be configured as an actual secondary cell in an instance in which the cell is caused to transition to the activated state.
85. An apparatus according to clause 84, wherein the processing system is arranged to cause the apparatus to:
   determine a strength for the cell based on a channel state indicator; and
   cause the strength to be transmitted in the measurement report, wherein the measurement report is configured to cause the cell to transition to an active state.
86. An apparatus according to clause 85, wherein the channel state indicator is signaled via L1 signaling.
87. An apparatus according to any one of clauses 77 to 86, wherein the processing system is arranged to cause the apparatus to:
   cause a carrier corresponding to the cell to be activated.
88. An apparatus according to any one of clauses 77 to 87, wherein the cell is a new carrier type cell.
89. An apparatus according to any one of clauses 77 to 88, wherein the apparatus comprises at least one of a user equipment or a communications device.
90. An apparatus according to any one of clauses 77 to 89, wherein the apparatus is configured for use in at least one of global system for mobile communications, wideband code division multiple access, time division synchronous code division multiple access, a long term evolution or long term evolution advanced system.
91. A computer program product comprising a set of instructions for controlling a cell state, which, when executed by an apparatus associated with the cell, causes the apparatus to perform the steps of:
   generate a measurement report relating to a cell; and
   cause the measurement report to be transmitted, wherein the measurement report is configured to cause the cell to transition from a dormant state to an activated state.
92. A computer program product according to clause 91, further comprising a set of instructions, which, when executed by the apparatus, further cause the apparatus at least to:
   receive an indication of cell cycle configuration for one or more cells within a coverage range;
   cause a primary discovery channel to be measured for the one or more cells within the coverage range; and
   discover a cell of the one or more cells within the coverage range.
93. A computer program product according to any one of clauses 91 or 92, wherein the measurement report is a cell activation report.
94. A computer program product according to clause 93, wherein the cell activation report comprises a cell identification and a cell cycle configuration during which a discovery signal for the cell was detected.
95. A computer program product according to clause 93, wherein the cell is discovered during a short active period of the cell, wherein the short active period of the cell is defined by the cell cycle configuration.
96. A computer program product according to clause 93, wherein the cell activation report is signaled via a reference signal received power measurement report.
97. A computer program product according to clause 93, further comprising a set of instructions, which, when executed by the apparatus, further cause the apparatus at least to:
   generate at least one of a buffer status report or a scheduling request; and
   cause the at least one of the buffer status report or the scheduling request to be included in the cell activation report, wherein the at least one of the buffer status report or the scheduling request is configured to cause a cell with resources to be activated.
98. A computer program product according to any one of clauses 91 to 98, further comprising a set of instructions, which, when executed by the apparatus, further cause the apparatus at least to:
   cause a virtual secondary cell to be configured to correspond to a cell in a dormant state; and
   cause the virtual secondary cell to be configured as an actual secondary cell in an instance in which the cell is caused to transition to the activated state.
99. A computer program product according to clause 98, further comprising a set of instructions, which, when executed by the apparatus, further cause the apparatus at least to:
   determine a strength for the cell based on a channel state indicator; and
   cause the strength to be transmitted in the measurement report, wherein the measurement report is configured to cause the cell to transition to an active state.
100. A computer program product according to clause 99, wherein the channel state indicator is signaled via L1 signaling.
101. A computer program product according to any one of clauses 97 to 100, further comprising a set of instructions, which, when executed by the apparatus, further cause the apparatus at least to:
   cause a carrier corresponding to the cell to be activated.
102. A computer program product according to any one of clauses 97 to 101, wherein the cell is a new carrier type cell.
103. An apparatus for controlling a cell state, the apparatus comprising:
   means for generating a measurement report relating to a cell; and
   means for causing the measurement report to be transmitted, wherein the measurement report is configured to cause the cell to transition from a dormant state to an activated state.
104. An apparatus according to clause 103, further comprising:
   means for receiving an indication of cell cycle configuration for one or more cells within a coverage range;
   means for causing a primary discovery channel to be measured for the one or more cells within the coverage range; and
   means for discovering a cell of the one or more cells within the coverage range.
105. An apparatus according to any one of clauses 103 or 104, wherein the measurement report is a cell activation report.
106. An apparatus according to clause 105, wherein the cell activation report comprises a cell identification and a cell cycle configuration during which a discovery signal for the cell was detected.
107. An apparatus according to clause 105, wherein the cell is discovered during a short active period of the cell, wherein the short active period of the cell is defined by the cell cycle configuration.
108. An apparatus according to clause 105, wherein the cell activation report is signaled via a reference signal received power measurement report.
109. An apparatus according to clause 105, further comprising:
   means for generating at least one of a buffer status report or a scheduling request; and
   means for causing the at least one of the buffer status report or the scheduling request to be included in the cell activation report, wherein the at least one of the buffer status report or the scheduling request is configured to cause a cell with resources to be activated.
110. An apparatus according to any one of clauses 103 to 109, further comprising:
   means for causing a virtual secondary cell to be configured to correspond to a cell in a dormant state; and
   means for causing the virtual secondary cell to be configured as an actual secondary cell in an instance in which the cell is caused to transition to the activated state.
111. An apparatus according to clause 110, further comprising:
   means for determining a strength for the cell based on a channel state indicator; and
   means for causing the strength to be transmitted in the measurement report, wherein the measurement report is configured to cause the cell to transition to an active state.
112. An apparatus according to clause 111, wherein the channel state indicator is signaled via L1 signaling.
113. An apparatus according to any one of clauses 103 to 112, further comprising:
   means for causing a carrier corresponding to the cell to be activated.
114. An apparatus according to any one of clauses 103 to 113, wherein the cell is a new carrier type cell.
115. An apparatus according to any one of clauses 103 to 114, wherein the apparatus comprises at least one of a user equipment or a communications device.
116. An apparatus according to any one of clauses 103 to 115, wherein the apparatus is configured for use in at least one of global system for mobile communications, wideband code division multiple access, time division synchronous code division multiple access, a long term evolution or long term evolution advanced system.
117. A method of controlling a cell state, the method comprising:
   receiving an indication of scheduled data, wherein the indication is provided by a base station based on a measurement report; and
   transitioning from a dormant state to an activated state; and
   causing a communication of the scheduled data via a corresponding carrier on a communication device.
118. A method according to clause 117, wherein the measurement report is a cell activation report.
119. A method according to clause 118, wherein the cell activation report comprises a cell identification and a cell cycle configuration.
120. A method according to clause 118, wherein the cell activation report is signaled via a reference signal received power measurement report.
121. A method according to clause 118, wherein the cell activation report comprises at least one of a buffer status report or a scheduling request.
122. A method according to any one of clauses 118 to 121, wherein the cell activation report is generated by the communication device.
123. An apparatus for controlling a cell state, the apparatus comprising:
   a processing system arranged to cause the apparatus to at least:
   receive an indication of scheduled data, wherein the indication is provided by a base station based on a measurement report; and
   transition from a dormant state to an activated state; and
   cause a communication of the scheduled data via a corresponding carrier on a communication device.
124. An apparatus according to clause 123, wherein the measurement report is a cell activation report.
125. An apparatus according to clause 124, wherein the cell activation report comprises a cell identification and a cell cycle configuration.
126. An apparatus according to clause 124, wherein the cell activation report is signaled via a reference signal received power measurement report.
127. An apparatus according to clause 124, wherein the cell activation report comprises at least one of a buffer status report or a scheduling request.
128. An apparatus according to any one of clauses 124 to 127, wherein the cell activation report is generated by the communication device.
129. An apparatus according to any one of clauses 123 to 128, wherein the apparatus comprises at least one of a new carrier type cell.
130. An apparatus according to any one of clauses 123 to 129, wherein the apparatus is configured for use in at least one of global system for mobile communications, wideband code division multiple access, time division synchronous code division multiple access, a long term evolution or long term evolution advanced system.
131. A computer program product comprising a set of instructions for controlling a cell state, which, when executed by an apparatus associated with the cell, causes the apparatus to:
   receive an indication of scheduled data, wherein the indication is provided by a base station based on a measurement report; and
   transition from a dormant state to an activated state; and
   cause a communication of the scheduled data via a corresponding carrier on a communication device.
132. A computer program product according to clause 131, wherein the measurement report is a cell activation report.
133. A computer program product according to clause 132, wherein the cell activation report comprises a cell identification and a cell cycle configuration.
134. A computer program product according to clause 132, wherein the cell activation report is signaled via a reference signal received power measurement report.
135. A computer program product according to clause 132, wherein the cell activation report comprises at least one of a buffer status report or a scheduling request.
136. A computer program product according to any one of clauses 132 to 135, wherein the cell activation report is generated by the communication device.
137. An apparatus for controlling a cell state, the apparatus comprising:
   means for receiving an indication of scheduled data, wherein the indication is provided by a base station based on a measurement report; and
   means for transitioning from a dormant state to an activated state; and
   means for causing a communication of the scheduled data via a corresponding carrier on a communication device.
138. An apparatus according to clause 137, wherein the measurement report is a cell activation report.
139. An apparatus according to clause 138, wherein the cell activation report comprises a cell identification and a cell cycle configuration.
140. An apparatus according to clause 138, wherein the cell activation report is signaled via a reference signal received power measurement report.
141. An apparatus according to clause 138, wherein the cell activation report comprises at least one of a buffer status report or a scheduling request.
142. An apparatus according to any one of clauses 138 to 141, wherein the cell activation report is generated by the communication device.
143. An apparatus according to any one of clauses 137 to 142, wherein the apparatus comprises at least one of a new carrier type cell.
144. An apparatus according to any one of clauses 137 to 143, wherein the apparatus is configured for use in at least one of global system for mobile communications, wideband code division multiple access, time division synchronous code division multiple access, a long term evolution or long term evolution advanced system.

## Claims

1. A method of controlling a cell state, the method comprising:
receiving an indication of a discovery of a cell from a communication device;
determining the cell based on the indication; and
causing the cell to transition to an activated state from a dormant state.

2. A method according to claim 1, further comprising:
causing a cell cycle configuration to be transmitted to another cell, wherein the cell cycle configuration indicates a short active period for the cell.

3. A method according to any one of claims 1 or 2, wherein the indication of the discovery of the cell by the communication device is provided via a cell activation report.

4. A method according to claim 3, wherein the cell activation report comprises one or more of:
a cell identification and a cell cycle configuration during which a discovery signal for the cell was detected;
a buffer status report; and/or
a scheduling request.

5. A method according to claim 4, further comprising:
determining that the short active period of the cell does not comprise resources for the communication device based on the at least one of the buffer status report or the scheduling request; and
determining a cell to transition to the activated state in an instance in which the cell comprises resources for the communication device.

6. A method according to any one of claims 1 to 5, further comprising:
receiving a channel state indicator from the communication device configured with a virtual secondary cell, wherein the virtual secondary cell is associated with a discovered cell in the dormant state;
causing the cell associated with the virtual secondary cell to transition to the activated state; and
causing the virtual secondary cell to be reconfigured to the cell.

7. A method according to any one of claims 1 to 6, further comprising:
causing a carrier on the communication device corresponding to the cell to be activated.

8. An apparatus for controlling a cell state, the apparatus comprising a processing system configured to perform the method according to any one of claim 1 to claim 7.

9. A computer program product comprising a computer-readable medium comprising a set of instructions for use in controlling a cell state, which, when executed by apparatus associated with the cell, causes the apparatus to perform the method according to any one of claim 1 to claim 7.

10. A method of controlling a cell state, the method comprising:
generating a measurement report relating to a cell; and
causing the measurement report to be transmitted, wherein the measurement report is configured to cause the cell to transition from a dormant state to an activated state.

11. A method according to claim 10, further comprising:
receiving an indication comprising cell cycle configuration for the cell, wherein the indication may further comprise cell cycle configuration for one or more further cells within a coverage range; and
causing a primary discovery channel to be measured for at least the cell in accordance with the cell cycle configuration corresponding thereto in order to discover the cell.

12. A method according to any one of claims 10 or 11, wherein the measurement report is a cell activation report.

13. A method according to claim 12, further comprising:
generating at least one of a buffer status report or a scheduling request; and
causing the at least one of the buffer status report or the scheduling request to be included in the cell activation report, wherein the at least one of the buffer status report or the scheduling request is configured to cause the cell to be activated in on the basis of its resource availability.

14. A method according to any one of claims 10 to 13, further comprising:
causing a virtual secondary cell to be configured to correspond to the cell when it is in a dormant state; and
causing the virtual secondary cell to be configured as an actual secondary cell in an instance in which the cell is caused to transition to the activated state.

15. A method according to claim 14, further comprising:
determining a strength for the cell based on a channel state indicator; and
causing the strength to be transmitted in the measurement report, wherein the measurement report is configured to cause the cell to transition to an active state.

16. A method according to any one of claims 10 to 15, further comprising:
causing a carrier corresponding to the cell to be activated.

17. A method according to any one of claims 10 to 16, wherein the cell is a new carrier type cell.

18. An apparatus for controlling a cell state, the apparatus comprising a processing system configured to perform the method according to any one of claim 10 to claim 17.

19. A computer program product comprising a computer-readable medium comprising a set of instructions for controlling a cell state, which, when executed by an apparatus associated with the cell, causes the apparatus to perform the method according to any one of claim 10 to claim 17.

20. A method of controlling a cell state, the method comprising:
receiving an indication of scheduled data, wherein the indication is provided by a base station based on a measurement report;
transitioning from a dormant state to an activated state; and
causing a communication of the scheduled data via a corresponding carrier on a communication device.

21. A method according to claim 20, wherein the measurement report is a cell activation report.

22. A method according to claim 21, wherein the cell activation report comprises one or more of:
a cell identification and a cell cycle configuration;
a buffer status report; and/or
a scheduling request.

23. A method according to any one of claims 21 or 22, wherein the cell activation report is signaled via a reference signal received power measurement report.

24. An apparatus for controlling a cell state, the apparatus comprising a processing system configured to perform the method according to any one of claim 20 to claim 23.

25. A computer program product comprising a computer-readable medium comprising a set of instructions for controlling a cell state, which, when executed by an apparatus associated with the cell, causes the apparatus to perform the method according to any one of claim 20 to claim 23.
